# EUROPEAN PATENT APPLICATION

(11) **EP 2 309 766 A2**
(43) Date of publication of application: **13.04.2011**
(21) Application number: 10009055.4
(22) Date of filing: 31.08.2010
(51) Int. Cl.: H04N 13/00

(54) **Method and system for rendering 3D graphics based on 3D display capabilities**

(30) Priority: 15.09.2009 US 242644 P; 23.10.2009 US 604980
(71) Applicant: Broadcom Corporation, Irvine, CA 92617 (US)
(72) Inventor: Hulyalkar, Samir, 18940 Newton PA (US); Kellermann, Marcus, 92172 San Diego CA (US); Chen, Xuemin, 92067 Rancho Santa Fee CA (US); Klebanov, Ilja, L3T 3C9 Thornhill (CA)
(74) Representative: Jehle, Volker Armin

(57) **Abstract**

A first 3D graphics and/or 3D video processing device generates left and right view 3D graphics frames comprising 3D content which are communicated to a 3D display device for display. The 3D frames are generated based on a display format utilized by the 3D display device. The first 3D device may comprise a set-top-box and/or computer. The left and/or right 3D graphics frames may be generated based on time sequential display and/or polarizing display. Sub-sampling 3D graphics frames may be based on odd and even row display polarization patterns and/or checkerboard polarization patterns. Left and right 3D graphics pixels may be blended with video pixels. Left and/or right 3D graphics frames may be displayed sequentially in time. Left and/or right 3D graphics frames may be sub-sampled in complimentary pixel patterns, interleaved in a single frame and displayed utilizing varying polarization orientations for left and right pixels.

## Description

### CROSS-REFERENCE TO RELATED APPLICATIONS/INCORPORATION BY REFERENCE

This application makes reference to, claims priority to, and claims the benefit of United States Provisional Application Serial No. 61/242,644, filed on September 15, 2009.

### FIELD OF THE INVENTION

Certain embodiments of the invention relate to communication systems. More specifically, certain embodiments of the invention relate to rendering 3D graphics based on 3D display capabilities.

### BACKGROUND OF THE INVENTION

Digital video capabilities may be incorporated into a wide range of devices such as, for example, digital televisions, digital direct broadcast systems, digital recording devices, gaming consoles and the like. Digital video devices may provide significant improvements over conventional analog video systems in processing and transmitting video sequences with increased bandwidth efficiency.

Video content may be recorded in two-dimensional (2D) format or in three-dimensional (3D) format. In various applications such as, for example, the DVD movies and the digital TV, a 3D video is often desirable because it is often more realistic to viewers than the 2D counterpart. A 3D video comprises a left view video and a right view video. A 3D video frame may be produced by combining left view video components and right view video components.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for rendering 3D graphics based on 3D display capabilities, as set forth more completely in the claims.

According to an aspect, a method for processing video is provided, the method comprising:
performing by one or more processors and/or circuits in a 3D graphics and/or 3D video processing device:
   generating left view 3D graphics frames and corresponding right view 3D graphics frames for 3D content to be displayed on a 3D display device based on a display format that is utilized by said 3D display device; and
   communicating said left view 3D graphics frames and said corresponding right view 3D graphics frames to said 3D display device.
Advantageously, said 3D graphics and/or 3D video processing device comprises one or more of a set-top-box and a computer.
Advantageously, the method further comprises generating said left view 3D graphics frames and said corresponding right view 3D graphics frames based on a time sequential display format that is utilized by said 3D display device.
Advantageously, the method further comprises generating said left view 3D graphics frames and said corresponding right view 3D graphics frames based on a polarizing display format that is utilized by said 3D display device.
Advantageously, the method further comprises sub-sampling said left view 3D graphics frames and/or said right view 3D graphics frames based on one or more display polarization patterns.
Advantageously, the method further comprises sub-sampling one of a left view 3D graphics frame and a corresponding right view 3D graphics frame based on odd pixel rows and sub-sampling another one of said left view 3D graphics frame and said corresponding right view 3D graphics frame based on even pixel rows.
Advantageously, the method further comprises sub-sampling one of a left view 3D graphics frame and a corresponding right view 3D graphics frame based on alternating pixel positions within a checker board pattern and sub-sampling a another one of said left view 3D graphics frame and said corresponding right view 3D graphics frame based on complimentary alternating pixel positions within said checker board pattern.
Advantageously, pixels from said left view 3D graphics frames are blended with video pixels and/or pixels from said right view 3D graphics frames are blended with video pixels.
Advantageously, said left view 3D graphics frames and said right view 3D graphics frames are displayed sequentially in time.
Advantageously, said left view 3D graphics frames and said right view 3D graphics frames are sub-sampled in complimentary patterns, interleaved in a single frame and displayed utilizing varying polarization orientation for left and right pixels.
According to an aspect, a system for processing video comprises:
one or more processors and/or circuits in a first 3D graphics and/or 3D video processing device, wherein said one or more processors and/or circuits are operable to:
   generate left view 3D graphics frames and corresponding right view 3D graphics frames for 3D content to be displayed on a 3D display device based on a display format that is utilized by said 3D display device; and
   communicate said left view 3D graphics frames and said corresponding right view 3D graphics frames to said 3D display device.
Advantageously, said 3D graphics and/or 3D video processing device comprises one or more of a set-top-box and a computer.
Advantageously, said one or more processors and/or circuits are operable to generate said left view 3D graphics frames and said corresponding right view 3D graphics frames based on a time sequential display format that is utilized by said 3D display device.
Advantageously, said one or more processors and/or circuits are operable to generate said left view 3D graphics frames and said corresponding right view 3D graphics frames based on a polarizing display format that is utilized by said 3D display device.
Advantageously, said one or more processors and/or circuits are operable to sub-sample said left view 3D graphics frames and/or said right view 3D graphics frames based on one or more display polarization patterns.
Advantageously, said one or more processors and/or circuits are operable to sub-sample one of a left view 3D graphics frame and a corresponding right view 3D graphics frame based on odd pixel rows and sub-sample another one of said left view 3D graphics frame and said corresponding right view 3D graphics frame based on even pixel rows.
Advantageously, said one or more processors and/or circuits are operable to sub-sample one of a left view 3D graphics frame and a corresponding right view 3D graphics frame based on alternating pixel positions within a checker board pattern and sub-sample a another one of said left view 3D graphics frame and said corresponding right view 3D graphics frame based on complimentary alternating pixel positions within said checker board pattern.
Advantageously, pixels from said left view 3D graphics frames are blended with video pixels and/or pixels from said right view 3D graphics frames are blended with video pixels.
Advantageously, said left view 3D graphics frames and said right view 3D graphics frames are displayed sequentially in time.
Advantageously, said left view 3D graphics frames and said right view 3D graphics frames are sub-sampled in complimentary patterns, interleaved in a single frame and displayed utilizing varying polarization orientation for left and right pixels.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram of an exemplary 3D video and/or 3D graphics communication system, in accordance with an embodiment of the invention.

FIG. 2 is a block diagram that illustrates an exemplary video reception unit that may be operable to generate and/or process left and/or right view 3D graphics based on 3D display capabilities, in accordance with an embodiment of the invention.

FIG. 3 is a block diagram that illustrates exemplary left view 3D graphics and right view 3D graphics frames, in accordance with an embodiment of the invention.

FIG. 4 is a block diagram that illustrates an exemplary time sequential display of a left view 3D graphics frame and a right view 3D graphics frame, in accordance with an embodiment of the invention.

FIG. 5 is a block diagram that illustrates an exemplary polarization based 3D graphics frame comprising rows of pixels from left and right view 3D graphics frames, in accordance with an embodiment of the invention.

FIG. 6 is a block diagram that illustrates an exemplary polarization based 3D graphics frame comprising a checker board pattern of pixels from left and right view 3D graphics frames, in accordance with an embodiment of the invention.

FIG. 7 is a flow chart illustrating exemplary steps for generating left view and right view 3D graphics and processing the left and right view 3D graphics based on a display type, in accordance with an embodiment of the invention.

### DETAILED DESCRIPTION OF THE INVENTION

Certain embodiments of the invention can be found in a method and system for rendering 3D graphics based on 3D display capabilities. In accordance with various embodiments of the invention, one or more processors and/or circuits in a first 3D graphics and/or 3D video processing device may generate left view 3D graphics frames and corresponding right view 3D graphics frames for 3D content to be displayed on a 3D display device based on a display format that is utilized by the 3D display device. The left view 3D graphics frames and the right view 3D graphics frames may be communicated to the 3D display device. In this regard, the first 3D graphics and/or 3D video processing device may comprise one or more of a set-top-box and a computer.

The left view 3D graphics frames and/or the right view 3D graphics frames may be generated based on a type of display format. For example, the left view 3D graphics frames and the corresponding right view 3D graphics frames may be generated based on a time sequential display format that may be utilized by the 3D display device. Alternatively, the left view 3D graphics frames and the corresponding right view 3D graphics frames may be generated based on a polarizing display format that may be utilized by said 3D display device. The left view 3D graphics frames and/or the right view 3D graphics frames may be sub-sampled based on one or more display polarization patterns. For example, one of a left view 3D graphics frame and a corresponding right view 3D graphics frame may be sub-sampled based on odd pixel rows. In addition, another one of the left view 3D graphics frame and the corresponding right view 3D graphics frame may be sub-sampled based on even pixel rows.

In another exemplary embodiment of the invention, one of a left view 3D graphics frame and a corresponding right view 3D graphics frame may be sub-sampled based on alternating pixel positions in a checker board pattern. In addition, another one of the left view 3D graphics frame and the corresponding right view 3D graphics frame may be sub-sampled based on complimentary alternating pixel positions within the checker board pattern. Pixels from the left view 3D graphics frames and/or the right view 3D graphics frames may be blended with video pixels, for example, left view and right view video pixels and/or 2D video pixels. In various embodiments of the invention, the left view 3D graphics frames and the right view 3D graphics frames may be displayed sequentially in time. In other embodiments of the invention, the left view 3D graphics frames and the right view 3D graphics frames may be sub-sampled in complimentary patterns, interleaved in a single frame and displayed utilizing varying polarization orientation for left and right pixels. In this manner, left and/or right 3D graphics frames may be generated and may be processed based on various 3D display device capabilities. For example, generating 3D graphics frames based on knowledge of subsequent sub-sampling for display purposes may enable improved quality and reduced complexity in processing the 3D graphics frames. For example, knowledge of subsequent sub-sampling may enable a reduction of physical memory and/or processing devices and may enable improvements in utilization of memory and/or processing bandwidth.

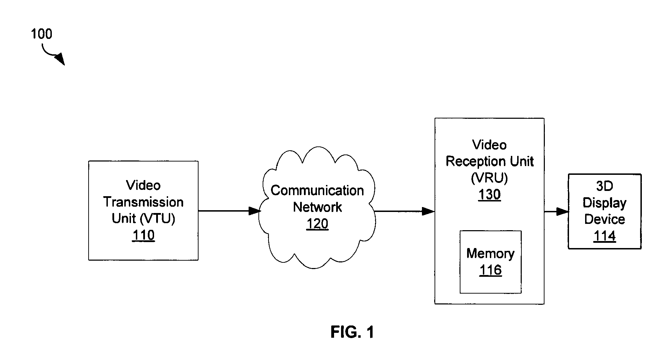

FIG. 1 is a block diagram of an exemplary 3D video and/or 3D graphics communication system, in accordance with an embodiment of the invention. Referring to FIG. 1, there is shown a video transmission unit (VTU) 110, a communication network 120, a video reception unit (VRU) 130, a memory 116 and a 3D display device 114.

The VTU 110 may comprise suitable logic, circuitry, interfaces and/or code that may be operable to provide coded video content to the VRU 130. The VTU 110 may be operable to encode 3D video. For example, the VTU 110 may be operable to encode the 3D video as a left view video stream and a right view video stream which may be referred to as the left video stream and/or the right video steam. The left video stream and/or the right video stream may be transmitted via different channels to the VRU 130. In addition, a stream of left view 3D graphics information and/or a stream of right view 3D graphics information may be transmitted via different channels to the VRU 130. The left view 3D graphics information stream and the right view 3D graphics information stream may be referred to as the left graphics stream and the right graphics stream. Examples of the VTU 110 may comprise a cable television head-end, a direct broadcast satellite head-end and a web server.

The communication network 120 may comprise suitable logic, circuitry, interfaces and/or code that may be operable to provide platforms for communication between the VTU 110 and the VRU 130. The communication network 120 may be implemented as a wired or wireless communication network. The communication network 120 may be local area network, wide area network, the Internet, and the like.

The VRU 130 may comprise suitable logic, circuitry, interfaces and/or code that may be operable to receive a transport stream from the VTU 110 over the communication network 120. The received transport stream may comprise coded left and/or right 3D video streams, for example, video streams comprising one or more 3D TV programs and/or may comprise left and/or right 3D graphics information streams, for example. The left and/or right 3D graphics information may comprise left and/or right 3D graphics primitives, for example. In this regard, the VRU 130 may be operable to de-multiplex or parse the left and/or right video streams and/or the left and/or right 3D graphics information streams from the received transport stream. The VRU 130 may extract and/or may store in the memory 116 of the VRU 130, the left and/or right video stream data and/or the left and/or right 3D graphics information, for example. In various embodiments of the invention, left and/or right 3D graphics information may not be received from the VTU 100. For example, left and/or right 3D graphics information may be stored in the VRU 130. The left and/or right 3D graphics information may correspond to left and/or right video content or may be independent of the video content. In various embodiments of the invention, the left and/or right 3D graphics information may be selected based on user input. The VRU 130 may be operable to decode the extracted left and/or right 3D video stream data. The VRU 130 may be operable to generate left and/or right 3D graphics based on the left and/or right 3D graphics information. The left and or right 3D graphics information may comprise left and/or right view graphics primitives that may be rendered by the VRU 130 to generate left view and/or right view 3D graphics, for example. The left and/or right view 3D graphics may comprise left and/or right view 3D pixel data and/or left and/or right view 3D graphics frames. In this regard, the VRU 130 may process the left and/or right view 3D graphics information and/or the left and/or right view 3D graphics based on capabilities of the 3D display device 114. The left and/or right view 3D graphics information, 3D graphics, 3D pixels and/or 3D frames may be referred to as left and/or right graphics information, graphics, pixels and/or frames. An exemplary VRU 130 may comprise a set-top box and/or a personal computer.

The 3D display device 114 may be operable to display left and right view 3D graphics and/or 3D video data as alternating time sequential left and right frames and/or as single frames comprising interleaved left and right view pixels where the left and right view pixels are polarized at different angles or in different directions. For example, lines of left pixels may alternate with lines of right pixels where the lines of left pixels and the lines of right pixels may be polarized at different angles or in different directions. In another exemplary embodiment of the invention, a checkerboard lattice pattern comprising alternating left and right pixels may be polarized at different angles or in different directions to differentiate the left and right pixels. In this regard, polarization sheets that may comprise line based and/or checkerboard based polarization patterns may be utilized within the 3D display device 114.

In various embodiments of the invention, the 3D display device 114 may utilize left handed and right handed circular polarization to differentiate the left and right graphics pixel data. In other embodiments of the invention, the 3D display device 114 may utilize linear polarization alternating at different angles, for example, plus 45 degrees and minus 45 degrees to differentiate the left and right pixel data. In instances when the 3D display device 114 is operable to display polarized left and/or right view 3D graphics and/or polarized left and/or right view 3D video, a viewer may need to wear polarizing 3D glasses that may filter light for a left eye in accordance with the left view display polarization and may filter light for a right eye in accordance with the right view display polarization angle or direction. In various embodiments of the invention, the 3D display device 114 may be operable to communicate with the 3D glasses to adaptively match the type of polarization utilized. For example, the 3D glasses and/or the 3D display device 114 may be operable to adaptively determine whether to utilize circular or line polarization. In this regard, the 3D display device 114 and/or the 3D glasses may communicate via a Bluetooth connection, however, the invention is not limited in this regard and may utilized any suitable wire and/or wireless connection.

The 3D display device 114 may be operable to display time sequential left view and right view 3D graphics data and/or left view and right view 3D video data as alternating frames of left view pixels and right view pixels. In instances when the 3D display device 114 is operable to display time sequential left and/or right views, a viewer may need to wear active shutter 3D glasses. The left and right 3D graphics frames that may be generated for time sequential display may each represent an image at different instants in time that may be spaced relative to the rate of display, however, the invention is not limited in this regard. In various embodiments of the invention, the 3D display device 114 may be operable to communicate with the 3D shutter glasses to adaptively synchronize the refresh rate of left and right 3D graphics frames with the shutter rate of the left and right 3D glasses. In this regard, the 3D display device 114 and/or the 3D glasses may communicate via a Bluetooth connection, however, the invention is not limited in this regard and may utilized any suitable wire and/or wireless connection.

In various embodiments of the invention, the 3D display device 114 may be operable to blend the left video data with the left 3D graphics data and may blend the right video data with the right 3D graphics data. The 3D display device 114 may be operable to display the left and/or right view 3D graphics and/or video based on time sequential left and right frames. Furthermore, the 3D display device 114 may be operable to display the left and/or right view 3D graphics and/or video based on or patterns of polarized left and right pixels. An exemplary 3D display device 114 may comprise a 3D television or a computer monitor.

In operation, the VTU 110 may be operable to encode left and/or right view 3D video and/or left and/or right view 3D graphics information. For example, a 3D TV program may be encoded into a left view video stream and/or a right view video stream. Similarly, 3D graphics information may be encoded into a left graphics information stream and/or a right graphics information stream. A multiplexed transport stream comprising a plurality of encoded video and/or 3D graphics streams may be communicated to the VRU 130 over the communication network 120. The VRU 130 may be operable to receive and/or de-multiplex the transport stream and may be operable to extract the left and/or right 3D video and/or the left and/or right view 3D graphics information. The VRU 130 may be operable to decode the coded left and/or right 3D video streams and the left and/or right 3D graphics information streams. The VRU 130 may be operable to process the received left and/or right 3D graphics information to generate left and/or right 3D graphics.

In various embodiments of the invention, left and/or right view 3D graphics information may be stored within the VRU 130 and may be utilized by the VRU 130 to generate the left and/or right view 3D graphics. The VRU 130 may utilize knowledge of the 3D display device 114 display capabilities to determine how to process the left and/or right 3D graphics information. For example, the 3D display device 114 may comprise time sequential display and/or polarized display capabilities. Similarly, the VRU 130 may utilize knowledge of the 3D display device 114 capabilities to process the left and/or right 3D video stream. The VRU 130 may communicate the left and/or right 3D graphics and/or the left and/or right 3D video to the 3D display device 114. The 3D display device 114 may be operable to overlay, blend and/or replace the left 3D video data with the corresponding left 3D graphics data and/or the right 3D video data with the corresponding right 3D graphics data. The resulting compound 3D left video and/or left 3D graphics data may be displayed sequentially in time with the compound 3D right video and/or right 3D graphics data. Alternatively, the compound 3D left video and/or the left 3D graphics data may be displayed simultaneously with the compound 3D right video and/or right 3D graphics data where the compound 3D left video and/or the left 3D graphics data and compound 3D right video and/or right 3D graphics data may be polarized differently by the 3D display device 114.

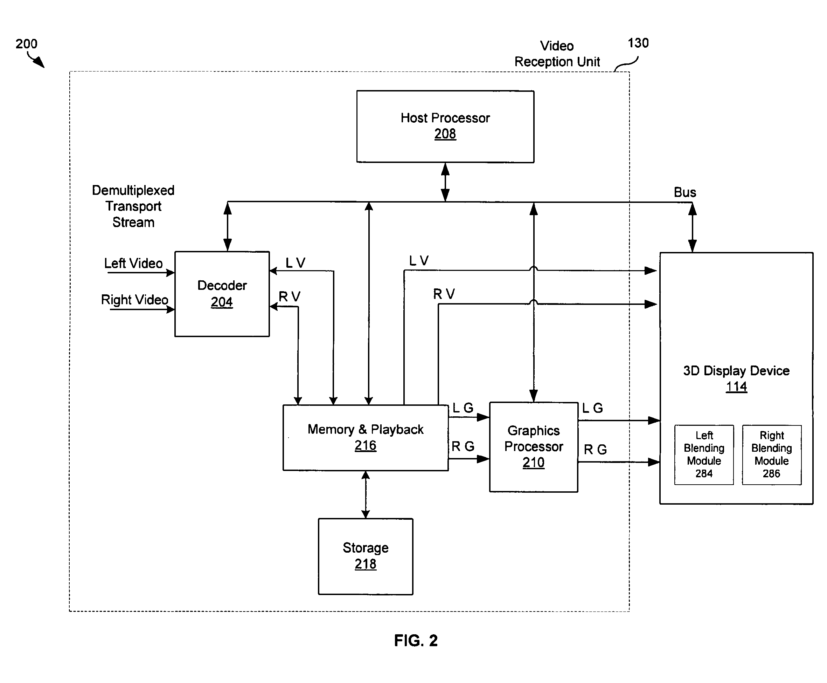

FIG. 2 is a block diagram that illustrates an exemplary video reception unit that may be operable to generate and/or process left and/or right view 3D graphics based on 3D display capabilities, in accordance with an embodiment of the invention. Referring to FIG. 2, there is shown a video processing system 200 comprising the VRU 130 that may comprise a host processor 208, a decoder 204, a memory and playback module 216, a local storage 218, a graphics processor 210. In addition, there is shown the 3D display device 114 that may comprise a left blending module 284 and a right blending module 286.

The 3D display device 114 is described with respect to FIG. 1. The left blending module 284 may comprise suitable logic, circuitry, interfaces and/or code that may be operable to receive and blend the left 3D graphics stream and the left 3D video stream. In this regard, the left blending module 284 may utilize a blending factor for the blending of the left video data and the left 3D graphics data. In various embodiments of the invention, the 3D display device 114 may determine the blending factor based on how opaque or transparent the left and/or right 3D graphics should be. In other embodiments of the invention, left and/or right 3D graphics content may replace video content and/or the left and/or right 3D graphics content may be displayed when video content is not desired. The right blending module 286 may comprise suitable logic, circuitry, interfaces and/or code that may be operable to receive and blend the right 3D graphics stream and the right video stream. In this regard, the right blending module 286 may utilize a blending factor for blending the right video and right 3D graphics. In various embodiments of the invention, the 3D display device 114 may determine the blending factor based on how opaque or transparent the graphics should be. In other embodiments of the invention, the graphics content may replace video content and/or the graphics content may be displayed when display of the video content is not desired. Output of the left and right blending modules 284 and/or 286 may be displayed as alternating left and right frames or may be sub-sampled, interleaved and displayed as single frames comprising alternating polarization of left and right pixels.

The 3D display device 114 may be operable to display the left view and/or right view 3D graphics and/or the left and/or right view 3D graphics blended with 3D or 2D video. In this regard, the 3D display device 114 may display the 3D graphics and/or video based on one or more of a plurality of display technologies. For example, the 3D display device 114 may utilize polarizing display techniques with, for example, a polarizing liquid crystal display device (LCD). In another exemplary embodiment of the invention, the 3D display device 114 may utilize time sequential display techniques with a DLN rear projector display or a high frame rate plasma display. Moreover, the 3D display device 114 may be operable to utilize one or more of spectral filter techniques, anaglyph techniques and/or Pulfrich techniques. The present invention is not limited to any specific type of 3D display technology and may utilize any suitable 3D video and/or 3D graphics display technology.

The host processor 208 may comprise suitable logic, circuitry, interfaces and/or code that may be operable to control operations of various units within the VRU 130 such as the decoder 204 and the graphics processor 210 for example. The host processor 208 may support various applications, for example, left and/or right view 3D graphics generation and/or 3D video decoding on the VRU 130. The host processor 208 may be operable to execute programming instructions and/or to communicate configuration parameters in order to generate the left and/or right 3D graphics. The host processor 208 may be operable to communicate with the memory and playback module 216 and/or the local storage 218 to read and/or write the left and/or right 3D graphics data, video data. 3D graphics information that may be utilized to generate the left and/or right 3D graphics may be communicated to the memory and playback module 216 and/or to the graphics processor 210. The host processor 208 may be operable to control and/or enable the graphics processor 210 to generate the left and/or right 3D graphics from the graphics information. The left and/or right 3D graphics may be referred to as left and/or right graphics or left and/or right graphics streams. In this regard, the host processor 208 may be configured to select left and/or right graphics streams for display in a 3D TV program.

The decoder 204 may comprise suitable logic, circuitry, interfaces and/or code that may be operable to decode, frame by frame, the left and/or right view video streams received from the VTU 110. The decoder 204 may be operable to utilize various video decompression algorithms such as specified in MPEG-2, MPEG-4, AVC, VC1, VP6, H.264 and/or other video formats to form decompressed or decoded video content for the received left view video from the VTU 110. Information such as the scene information from left view decoding may be communicated to be used for right view decoding, for example. In addition, the decoder 204 may comprise suitable logic, circuitry, interfaces and/or code that may be operable to decode right view video from the VTU 110 frame by frame. The decoder 204 may be operable to utilize various video decompression algorithms such as specified in MPEG-2, MPEG-4, AVC, VC1, VP6, H.264 and/or other video formats to form decompressed or decoded video contents for the received right view video from the VTU 110.

The graphics processor 210 may comprise suitable logic, circuitry, interfaces and/or code that may be operable to receive 3D left and/or right 3D graphics information, for example, 3D left and/or right graphics primitives, from the host processor 208 and/or the memory and playback module 216, for example, and may output left and/or right rendered 3D graphics images. In addition, the graphics processor 210 may comprise knowledge of various capabilities of the 3D display device 114 and/or may be operable to process left and/or right 3D graphics based on capabilities of the 3D display device 114. For example, the graphics processor 210 may be operable to generate left and/or right 3D graphics for time sequential 3D display capabilities and/or for polarizing 3D display capabilities. In various exemplary embodiments of the invention, the graphics processor 210 may be operable to generate alternating time sequential left and right 3D graphics. In other exemplary embodiments of the invention, the graphics processor 210 may be operable to sub-sample left and/or right 3D graphics data, for example, to generate 3D graphics for line polarization patterns and/or for checkerboard lattice polarization patterns. Moreover, the sub-sampled 3D graphics data may be processed by the graphics processor 210 to enhance the appearance of the sub-sampled 3D graphics content and/or to mitigate visual artifacts that may result from the sub-sampling. For example, the graphics processor 210 may enhance and/or smooth a sub-sampled diagonal line. The graphics processor 210 may be operable to generate left and/or right 3D graphics for left and right 3D graphics streams. The generated left and right 3D graphics streams may be communicated to the 3D display device 114.

In various embodiments of the invention, the left and/or right 3D graphics content may overlay, be blended with and/or replace left and/or right 3D video content and/or 2D video content, for example. Moreover, exemplary left and/or right view 3D graphics may comprise a user interface, for example, a user guide and/or a menu.

The memory and playback module 216 may comprise suitable logic, circuitry, interfaces and/or code that may be operable to store information such as configuration parameters, executable instructions and/or left and/or right view 3D graphics and/or video data that may be utilized by the VRU 130. The executable instructions may comprise various image processing algorithms that may be utilized to process the left and/or right video content by the decoder 204. Moreover, the executable instructions may comprise graphics processing algorithms that may be utilized by the graphics processor 210 to render the left and/or right view 3D graphics. The executable instructions may enable generation of the left and/or right view 3D graphics based on capabilities of the 3D display device 114, for example. Data stored within the memory and playback module 216 may comprise input and/or output of one or more of the decoder 204, the graphics processor 210, the storage 218, the host processor 208 and/or the 3D display device 114. In this regard, the stored data may comprise the left and/or the right video content and/or may comprise the left and/or the right 3D graphics content. The memory and playback module 216 may comprise RAM, ROM, low latency nonvolatile memory such as flash memory and/or other suitable electronic data storage.

The local storage 218 may comprise suitable logic, circuitry, interfaces and/or code that may be operable to record and store content from various video applications and/or 3D graphics programs and/or or 3D graphics data, for example. The local storage 218 is an optional component for the VRU 130. The local storage 218 may comprise magneto- and/or optical drives such as a hard disk. The local storage 418 may also comprise solid state memory such as flash memory and/or other suitable electronic data storage capable of recording and storing data and instructions.

In operation, the decoder 204 may be operable to receive left and/or right view streams of 3D video data. The left video stream and the right video stream may be decoded by the decoder 204 and may be stored in the memory and playback module 216 and/or the storage 218. The host processor 208 may select left and/or right 3D graphics information, for example, left and/or right 3D graphics primitives, to be processed by the graphics processor 210. For example, the left and/or right 3D graphics information may be stored in the VRU 130 and/or may be received from the VTU 110 in a multiplexed transport stream. In this regard, the left and/or right 3D graphics information may be stored in the memory and playback module 216 and/or in the storage 218. The selected left and/or right 3D graphics information may be sent to the graphics processor 210 for processing and/or for rendering left and/or right 3D graphics images.

The graphics processor 210 may be operable to generate the left and/or right 3D graphics based on the received left and/or right graphics information. The left and/or right graphics may comprise left and/or right pixel data. In various exemplary embodiments of the invention, the graphics processor 210 may be operable to generate time sequential frames of 3D left and/or or right view graphics. In other exemplary embodiments of the invention, the graphics processor 210 may be operable to generate 3D graphic frames comprising alternating lines of vertically sub-sampled left and/or right view pixels. In this regard, the alternating lines of left and/or right view pixels may correspond to alternating lines of display polarization of the 3D display device 114, for example. Furthermore, in an exemplary embodiment of the invention, the graphics processor 210 may be operable to sub-sample vertically and horizontally to generate a checkerboard lattice pattern of alternating left view and right view pixels for displaying the 3D graphics content in a checkerboard lattice polarization pattern.

The left and/or right 3D graphics generated for time sequential displays and/or generated for polarizing displays may be referred to as left and/or right graphics streams. The left and/or right video streams may comprise sub-samples for the line polarization patterns and/or sub-samples for checkerboard lattice polarization patterns. The VRU 130 may output the left and/or right video streams and/or the left and/or right 3D graphics streams to the 3D display device 114. The 3D display device 114 may be operable to receive the left and/or right video streams and/or the left and/or right 3D graphics streams and/or may be operable to blend the left 3D graphics content with the left video content in the left blending module 284 and may blend the right 3D graphics with the right video content in the right blending module 286 prior to displaying the 3D video and/or 3D graphics content. The 3D display device 114 may display the left blended and/or the right blended video and 3D graphics content as time sequential alternating left and right 3D frames and/or as polarized left and/or right pixels with in each 3D frame. The invention is not limited with regard to any specific method of 3D display and/or of any specific pattern of left and/or right 3D frames or left and/or right 3D pixels and may utilize any suitable method and/or combination of methods to differentiate the left and/or right graphics and/or video content.

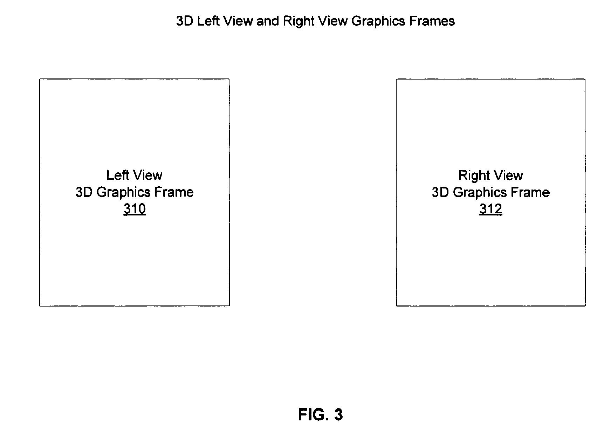

FIG. 3 is a block diagram that illustrates exemplary left view 3D graphics and right view 3D graphics frames, in accordance with an embodiment of the invention. Referring to FIG. 3, there is shown a left view 3D graphics frame 310 and a right view 3D graphics frame 312.

The left view 3D graphics frame 310 and/or the right view 3D graphics frame 312 may comprise 3D graphics that may be generated by the graphics processor 210. For example, the 3D graphics may be generated based on 3D graphics information, such as 3D graphics primitives that may be stored in the VRU 130 or may be received by the VRU 130 from the VTU 110. The left view 3D graphics frame 310 may comprise graphics content as seen from a stereoscopic left point of view and the right view 3D graphics frame 312 may comprise graphics content as seen from a stereoscopic right point of view. In this regard, an angle of view of an object located in the left view 3D graphics frame 310 may be different than an angle of view of the same object located in the right view 3D graphics frame 312. Moreover, at least a portion of background imagery that may be occluded by the object in the left view 3D graphics frame 310 may be viewable in the right view 3D graphics frame 312 and vice versa, due to the different viewing angles in the two frames 310 and 312.

In various embodiments of the invention, the left view 3D graphics frame 310 and the right view 3D graphics frame 312 may comprise two points of view occurring simultaneously, however, the invention is not so limited. For example, depending on how the two views 310 and 312 are displayed in time, the instant in time represented by the left view 3D graphics frame 310 may be somewhat different than the instant in time represented by the right view 3D graphics frame 312. In this regard, the different time instants represented by the left and right views 310 and 312 may correspond to the rate at which the two views are displayed by the 3D display device 114, for example.

A left view 3D graphics frame may be referred to as a left graphics frame and a right view 3D graphics frame may be referred to as a right graphics frame.

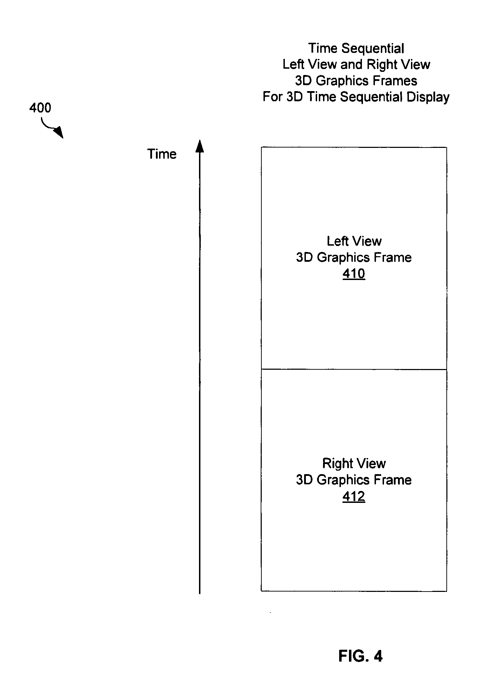

FIG. 4 is a block diagram that illustrates an exemplary time sequential display of a left view 3D graphics frame and a right view 3D graphics frame, in accordance with an embodiment of the invention. Referring to FIG. 4, there is shown a 3D time sequential frame system 400 comprising a left view 3D graphics frame 410 and a right view 3D graphics frame 412.

The left view 3D graphics frame 410 and/or the right view 3D graphics frame 412 may be similar and/or substantially the same as the left view 3D graphics frame 310 and/or the right view 3D graphics frame 312 described with respect to FIG. 3. The 3D time sequential frame system 400 may comprise a portion of a stream of frames where the stream of frames may comprise a plurality of 3D frame pairs. The 3D frame pairs within the stream may comprise a left 3D graphics frame and a right 3D graphics frame where each frame may be displayed sequentially by the 3D display device 114, for example. In addition, exemplary 3D streams may comprise various 3D graphics and/or 3D video content, such as a 3D TV program that may comprise 3D graphics, 3D TV advertizing comprising 3D graphics and/or a 3D graphical user interface.

In various embodiments of the invention, the left view 3D graphics frame 410 may be blended with a corresponding left view 3D video frame and the right view 3D graphics frame 412 may be blended with a corresponding right view 3D video frame. For example, the 3D display device 114 may perform the blending of the 3D video and the 3D graphics frames, for example.

In operation, the time sequential frame system 400 comprising the left view 3D graphics frame 410 and the right view 3D graphics frame 412 may be displayed by a 3D time sequential display, for example, by the 3D display device 114. A viewer of the displayed time sequential frame system 400 may wear 3D shutter glasses that may alternately block a left eye view and a right eye view at a rate corresponding to a rate of display of the left view 3D graphics frame 410 and the right view 3D graphics frame 412. In this manner, the viewer may perceive stereoscopic left and right views of the 3D graphics content and/or the blended video content. In various embodiments of the invention, the 3D graphics may be blended or overlaid with 2D video.

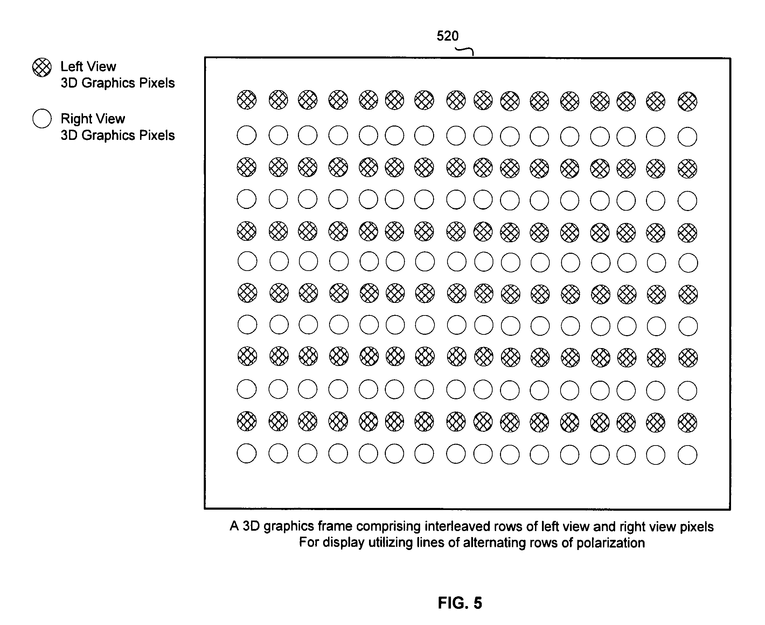

FIG. 5 is a block diagram that illustrates an exemplary polarization based 3D graphics frame comprising rows of pixels from left and right view 3D graphics frames, in accordance with an embodiment of the invention. Referring to FIG. 5, there is shown an alternating row 3D graphics frame 520.

The alternating row 3D graphics frame 520 may comprise odd and even rows of alternating left view 3D graphics frame pixels and right view 3D graphics frame pixels. For example, left view 3D graphics pixels may be sub-sampled from the left view 3D graphics frame 312 and right view 3D graphics pixels may be sub-sampled from the right view 3D graphics frame 312 described with respect to FIG. 3.

In an exemplary embodiment of the invention, the left view 3D graphics frame 310 and/or the right view 3D graphics frame 312 may be sub-sampled so that a different portion of pixels in each frame are eliminated and/or are not utilized for display. For example, the odd rows of pixels may be sampled from the left view 3D graphics frame 310 and the even rows of pixels may be sampled from the right view 3D graphics frame 312. Furthermore, pixels within the sub-sampled left view 3D graphics frame 310 and pixels within the sub-sampled right view 3D graphics frame 312 may be interleaved to generate the alternating row 3D graphics frame 520. The alternating row 3D graphics frame 520 may comprise a single frame of alternating rows of left view and right view 3D graphics pixels.

In various embodiments of the invention, pixels within the alternating row 3D graphics frame 520 may be generated by blending video pixels and 3D graphics pixels. In this regard, video pixel data from left view and right view 3D video frames that may correspond to the left view and right view 3D graphics frames 310 and/or 312, may be blended with the pixel data from the left view and the right view 3D graphics frames 310 and/or 312 respectively. The blending may be performed prior to the sub-sampling or after the sub-sampling. For example, in some instances, the left view and right view 3D video frames and the left view and right view 3D graphics frames may be sub-sampled prior to the blending. In another exemplary embodiment of the invention, the left view and the right view video frames may be blended with the left view and the right view 3D graphics frames 310 and/or 312 respectively, after sub-sampling the odd or even rows of the blended left view frame and the blended right view frames. Alternatively, pixels from the left and right view 3D graphics frames 310 and/or 312 may be blended and/or overlaid with 2D video.

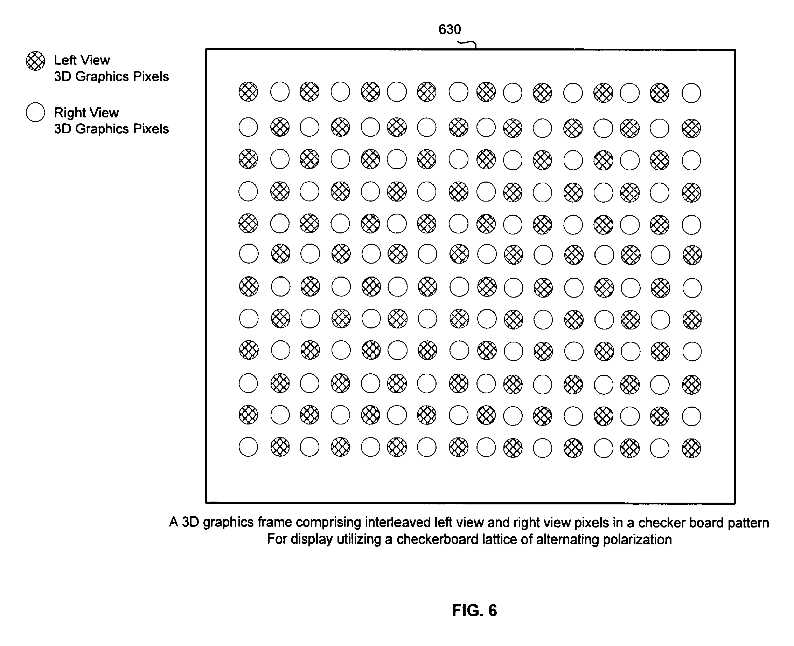

FIG. 6 is a block diagram that illustrates an exemplary polarization based 3D graphics frame comprising a checker board pattern of pixels from left and right view 3D graphics frames, in accordance with an embodiment of the invention. Referring to FIG. 6, there is shown a checker board 3D graphics frame 630.

The checker board 3D graphics frame 630 may comprise pixel positions of alternating left view 3D graphics frame content and right view 3D graphics frame content. In this regard, adjacent pixel positions within a row of a checker board 3D graphics frame 630 and adjacent pixels along a column of the same frame may alternate between left view 3D graphics pixels and right view 3D graphics pixels. The left view 3D graphics pixels may be sub-sampled from the left view 3D graphics frame 312 and the right view 3D graphics pixels may be sub-sampled from the right view 3D graphics frame 312 described with respect to FIG. 3.

In an exemplary embodiment of the invention, the left view 3D graphics frame 310 and/or the right view 3D graphics frame 312 may be sub-sampled in two complimentary checker board patterns so that a different portion of pixels in each frame are eliminated and/or are not utilized for display. In this regard, two exemplary complimentary checker board patterns for a lattice comprising zero through N rows and zero through M columns, may comprise a first pattern of odd row, odd column pixel positions and of even row, even column pixel positions and a second pattern of odd row, even column pixel positions and of even row, odd column positions. Pixels within the sub-sampled left view 3D graphics frame 310 and pixels within the sub-sampled right view 3D graphics frame 312 may be interleaved to generate the checker board 3D graphics frame 630. The checker board 3D graphics frame 630 may comprise a single 3D graphics frame comprising alternating left view 3D graphics pixels and right view 3D graphics pixels in adjacent horizontal and vertical pixel positions.

In various embodiments of the invention, pixels within the checker board 3D graphics frame 630 may comprise blended video and 3D graphics pixels. In this regard, the blending may be performed prior to the checker board pattern sub-sampling or after the checker board pattern sub-sampling. For example, in some instances left view and right view 3D video frames and the left view and right view 3D graphics frames 310 and 312 may be sub-sampled in complimentary checker board patterns. The sub-sampled left video pixels may be blended with the sub-sampled left 3D graphics pixels and similarly, the sub-sampled right video pixels and right 3D graphics pixels may be blended. In another exemplary embodiment of the invention, the left view and the right view video frames may be blended with the left view and the right view 3D graphics frames 310 and/or 312 respectively. Subsequently, the blended left and right frames may be sub-sampled in complimentary checker board patterns. Alternatively, the pixels from the left and right view 3D graphics frames 310 and/or 312 may be blended and/or overlaid with 2D video.

In operation, the checker board 3D graphics frame 630 comprising the pixel positions of left view 3D graphics pixels and the pixel positions of right view 3D graphics pixels may be displayed by a polarizing 3D display, for example, the 3D display device 114. In this regard, the 3D display device 114 may utilize checker board lattice based polarization sheets that may polarize the alternating pixel positions of left and right 3D graphics pixels in different orientations. The different orientations may comprise, for example, different circular polarization directions or different linear polarization angles. A viewer of the displayed checker board 3D graphics frame 630 may wear 3D polarizing glasses. In this regard, the 3D polarizing glasses may comprise a left side or left lens that is polarized in the same direction or same degree as the displayed left view 3D graphics pixel positions. Similarly, the 3D polarizing glasses may comprise a right side or right lens that is polarized in the same direction or same degree as the displayed right view 3D graphics pixel positions. In this manner, the viewer may perceive stereoscopic left and right views of the 3D graphics content and/or the blended video content.

Although the sub-sampling is described for odd and even rows of a frame and/or a checker board pattern, the invention is not so limited. For example, other patterns of sub-sampling may be utilized. Furthermore, the invention is not limited with regard to utilizing any specific method of 3D display and may utilize any suitable method and/or combination of methods to differentiate the left and/or right 3D graphics content and/or video content. For example, various embodiments of the invention may utilize spectral filter techniques, anaglyph techniques and/or Pulfrich techniques.

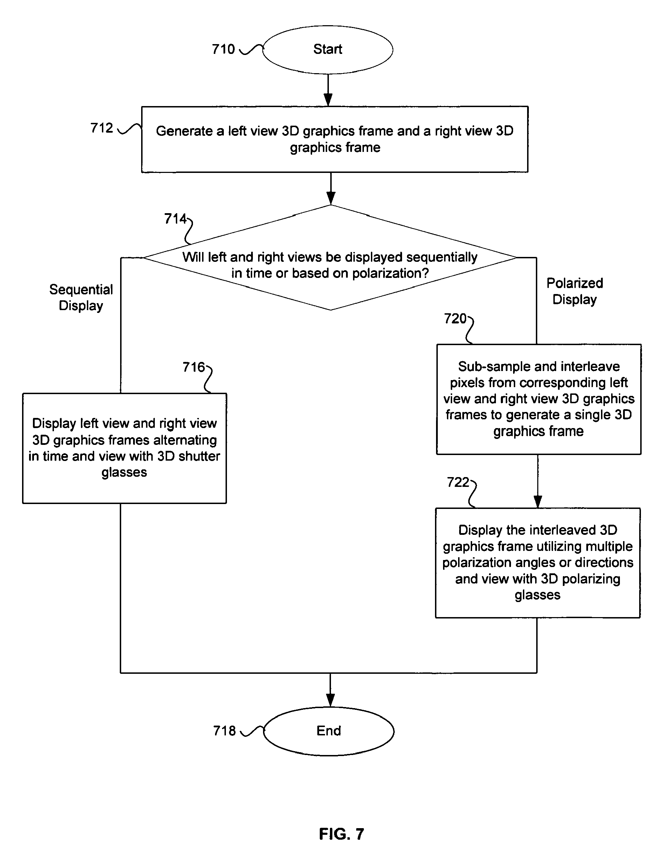

FIG. 7 is a flow chart illustrating exemplary steps for generating left view and right view 3D graphics and processing the left and right view 3D graphics based on a display type, in accordance with an embodiment of the invention. The exemplary steps may begin with step 710. In step 712, a left view 3D graphics frame 310 and a right view 3D graphics 312 frame may be generated by, for example, the graphics processing unit 210. In step 714, in instances when the left and right views are displayed sequentially in time, the exemplary steps may proceed to step 716. In step 716, the left view and right view 3D graphics frames 310 and 312 may be displayed alternating in time by the 3D display device 114 and may be viewed with 3D shutter glasses The exemplary steps may end at step 718. In various embodiments of the invention, the 3D display device 114 may blend the left and right view 3D graphics frames 310 and/or 312 with 3D and/or 2/D video content prior to displaying the left and right frames. In step 714, in instances when the left and right views may be displayed based on polarization techniques, the exemplary steps may proceed to step 720. In step 720, pixels from corresponding left view and right view 3D graphics frames 310 and 312 may be sub-sampled and interleaved to generate a single 3D graphics frame, for example, the alternating row 3D graphics frame 520 or the checker board 3D graphics frame 630. In this regard, the left and/or right view 3D graphics pixels may be blended with 3D and/or 2D video prior to sub-sampling or after sub-sampling. In step 722, the interleaved 3D graphics frame may be displayed utilizing multiple polarization angles or directions and may be viewed with 3D polarizing glasses. For example, the interleaved 3D graphics frame may be displayed utilizing a row based and/or a checker board based polarization pattern.

In an embodiment of the invention, one or more processors and/or circuits in a first 3D graphics and/or 3D video processing device, for example, the VRU 130, may generate left view 3D graphics frames, for example, the left view 3D graphics frame 310, and corresponding right view 3D graphics frames, for example, the right view 3D graphics frame 312, for 3D content to be displayed on a 3D display device 114, based on a display format that is utilized by the 3D display device 114. The left view 3D graphics frames and the right view 3D graphics frames may be communicated to the 3D display device 114. In this regard, the first 3D graphics and/or 3D video processing device, the VRU 130, for example, may comprise one or more of a set-top-box and a computer. The left view 3D graphics frames and/or the right view 3D graphics frames may be generated based on a type of display format. For example, the left view 3D graphics frames and the corresponding right view 3D graphics frames may be generated based on a time sequential display format that may be utilized by the 3D display device 114. Alternatively, the left view 3D graphics frames and the corresponding right view 3D graphics frames may be generated based on a polarizing display format that may be utilized by said 3D display device 114. The left view 3D graphics frames and/or the right view 3D graphics frames may be sub-sampled based on one or more display polarization patterns. For example, one of a left view 3D graphics frame 310 and a corresponding right view 3D graphics frame 312 may be sub-sampled based on odd pixel rows. In addition, another one of the left view 3D graphics frame 310 and the corresponding right view 3D graphics frame 312 may be sub-sampled based on even pixel rows. In another exemplary embodiment of the invention, one of the left view 3D graphics frame 310 and the corresponding right view 3D graphics frame 312 may be sub-sampled based on alternating pixel positions in a checker board pattern. In addition, another one of the left view 3D graphics frame 310 and the corresponding right view 3D graphics frame 312 may be sub-sampled based on complimentary alternating pixel positions within the checker board pattern. Pixels from the left view 3D graphics frames and/or the right view 3D graphics frames may be blended with video pixels, for example, left view and right view video pixels and/or 2D video pixels. In various embodiments of the invention, the left view 3D graphics frames and the right view 3D graphics frames may be displayed sequentially in time as described with respect to FIG. 4. In other embodiments of the invention, the left view 3D graphics frames and the right view 3D graphics frames may be sub-sampled in complimentary patterns, as described with respect to FIG. 5 and FIG. 6, may be interleaved in a single frame and displayed utilizing varying polarization orientation for left and right pixels. In this manner, left and/or right 3D graphics frames may be generated and may be processed based on various 3D display device 114 capabilities.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for rendering 3D graphics based on 3D display capabilities.

Accordingly, the present invention may be realized in hardware, software, or a combination of hardware and software. The present invention may be realized in a centralized fashion in at least one computer system or in a distributed fashion where different elements may be spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for processing video, the method comprising:
performing by one or more processors and/or circuits in a 3D graphics and/or 3D video processing device:
generating left view 3D graphics frames and corresponding right view 3D graphics frames for 3D content to be displayed on a 3D display device based on a display format that is utilized by said 3D display device; and
communicating said left view 3D graphics frames and said corresponding right view 3D graphics frames to said 3D display device.

2. The method according to claim 1, wherein said 3D graphics and/or 3D video processing device comprises one or more of a set-top-box and a computer.

3. The method according to claim 1, comprising generating said left view 3D graphics frames and said corresponding right view 3D graphics frames based on a time sequential display format that is utilized by said 3D display device.

4. The method according to claim 1, comprising generating said left view 3D graphics frames and said corresponding right view 3D graphics frames based on a polarizing display format that is utilized by said 3D display device.

5. The method according to claim 1, comprising sub-sampling said left view 3D graphics frames and/or said right view 3D graphics frames based on one or more display polarization patterns.

6. The method according to claim 5, comprising sub-sampling one of a left view 3D graphics frame and a corresponding right view 3D graphics frame based on odd pixel rows and sub-sampling another one of said left view 3D graphics frame and said corresponding right view 3D graphics frame based on even pixel rows.

7. The method according to claim 5, comprising sub-sampling one of a left view 3D graphics frame and a corresponding right view 3D graphics frame based on alternating pixel positions within a checker board pattern and sub-sampling a another one of said left view 3D graphics frame and said corresponding right view 3D graphics frame based on complimentary alternating pixel positions within said checker board pattern.

8. The method according to claim 1, wherein pixels from said left view 3D graphics frames are blended with video pixels and/or pixels from said right view 3D graphics frames are blended with video pixels.

9. The method according to claim 1, wherein said left view 3D graphics frames and said right view 3D graphics frames are displayed sequentially in time.

10. The method according to claim 1, wherein said left view 3D graphics frames and said right view 3D graphics frames are sub-sampled in complimentary patterns, interleaved in a single frame and displayed utilizing varying polarization orientation for left and right pixels.

11. A system for processing video, the system comprising:
one or more processors and/or circuits in a first 3D graphics and/or 3D video processing device, wherein said one or more processors and/or circuits are operable to:
generate left view 3D graphics frames and corresponding right view 3D graphics frames for 3D content to be displayed on a 3D display device based on a display format that is utilized by said 3D display device; and
communicate said left view 3D graphics frames and said corresponding right view 3D graphics frames to said 3D display device.

12. The system according to claim 11, wherein said 3D graphics and/or 3D video processing device comprises one or more of a set-top-box and a computer.

13. The system according to claim 11, wherein said one or more processors and/or circuits are operable to generate said left view 3D graphics frames and said corresponding right view 3D graphics frames based on a time sequential display format that is utilized by said 3D display device.

14. The system according to claim 11, wherein said one or more processors and/or circuits are operable to generate said left view 3D graphics frames and said corresponding right view 3D graphics frames based on a polarizing display format that is utilized by said 3D display device.

15. The system according to claim 11, wherein said one or more processors and/or circuits are operable to sub-sample said left view 3D graphics frames and/or said right view 3D graphics frames based on one or more display polarization patterns.
